# EUROPÄISCHE PATENTSCHRIFT

(11) **EP 1 271 043 B1**
(45) Veröffentlichungstag und Bekanntmachung des Hinweises auf die Patenterteilung: **20.09.2006**
(21) Anmeldenummer: 02012801.3
(22) Anmeldetag: 10.06.2002
(51) Int. Cl.: F16L 55/168

(54) **Arbeitsverfahren zur Abdichtung von Leckagen**
Method of sealing leaks
Procédé pour étancher des fuites

(30) Priorität: 23.06.2001 DE 10129807
(43) Veröffentlichungstag der Anmeldung: 02.01.2003
(73) Patentinhaber: Schulze, Reiner, 41749 Viersen (DE)
(72) Erfinder: Schulze, Reiner, 41749 Viersen (DE)
(74) Vertreter: Grosse, Wolf-Dietrich Rüdiger

(56) Entgegenhaltungen:
- WO-A-00/57099
- US-A- 3 236 407
- US-A- 5 020 572
- US-A- 5 629 065

## Beschreibung

Die Erfindung betrifft ein Arbeitsverfahren zur Abdichtung von Leckagen in, Flüssigkeiten führenden Rohren oder Flüssigkeiten enthaltenden Behältern, bei denen auf den, die Leckage begrenzenden Aussenflächenbereich der Rohr- bzw. Behälterwand eine Abdichtung aufgebracht und mit diesem verbunden wird, die aus einer flexiblen Abdeckplatte und zwischen dieser und dem Aussenflächenbereich frei gehaltenen und verschliessbaren Durchlässen für die, aus der Leckage austretende Flüssigkeit besteht.

Bei einem bekannten Verfahren dieser Art (PCT-WO 00/57099) werden die äusseren Ränder einer flexiblen Abdeckplatte nach deren Auflegen auf den, eine Leckage umgrenzenden Aussenflächenbereich des Rohres oder des Behälters z.B. durch Verschweissen verbunden. Die Abdeckplatte ist dabei mit einer verschliessbaren Oeffnung ausgestattet, durch die aus der Leckage austretende Flüssigkeit bis zur Beendigung der Befestigunsarbeiten an der flexiblen Abdeckplatte abfliessen kann, ohne diese Arbeiten zu behindern.

Der Erfindung liegt die Aufgabe zugrunde, dieses Verfahren so zu verbessern, dass die Notwendigkeit der Verschweißung der Ränder der Abdeckplatte mit den Rohren bzw. Behältern ebenso vermieden wird, wie die Anordnung von Verschluss-Elementen für die Austrittsöffnung in der Abdeckplatte.

Diese Aufgabe wird dadurch gelöst, dass die Verbindung der flexiblen Abdeckplatte mit der Behälterwand mittels schnell aushärtender Reaktionsharze bewirkt wird, wobei die Abdeckplatte oberhalb der Leckage zu positionierende Perforationsöffnungen aufweist, die nach dem Aushärten der Reaktionsharze durch mechani-Zusammendrücken verschlossen werden.

Auf diese Abdekkung kann, wie die Erfindung weiter vorsieht, im Bereich von deren Perforationsöffnungen eine zweite, in ihrem Umfang auf diesen Bereich beschränkte, ebenfalls mit Perforationsöffnungen versehene Abdeckung aufgelegt, mit der ersten Abdeckung verbunden und ihre Perforationsöffnungen zusammen mit denen der ersten Abdeckung verschlossen werden. Die beiden Abdeckungen werden wahlweise vor dem Auflegen auf die Leckage löt-, schweiss- oder klebverbunden. Anschließend kann das Verschließen der Perforationsöffnungen mit hammerförmigen Druck- oder Schlagwerkzeugen bewirkt werden. Die Reaktionsharze werden dabei während des Austretens der Flüssigkeiten aus der Leckage unter Druck, mit Abstand von dieser auf den umgebenden Aussenflächenbereich des Rohres bzw. des Behälters aufgebracht. Anschließend wird die Abdeckung auf die aufgebrachte Reaktionsharzschicht aufgelegt, angedrückt und dann die Perforationsöffnungen verschlossen. Die Reaktionsharze können auch entsprechend auf die Abdeckungen aufgebracht werden.

Weitere Merkmale der Erfindung sind in den Unteransprüchen angegeben.

Bei der Anwendung dieses erfindungsgemässen Verfahrens und der Vorrichtungen zu dessen Durchführung kommt es nicht zu den erwähnten Schwierigkeiten, insb. kann die Abdichtung bei vollem Leitungsdruck vorgenommen werden. Weil die Leitungsflüssigkeit während der Abdichtarbeiten weiter aus den Perforationsöffnungen strömen kann, bis diese erfindungsgemäss durch mechanisches Zusammendrücken verschlossen worden sind. Da dies erst geschieht, wenn die Abdeckungen plaziert worden sind und bei Aushärtung der Reaktionsharze auf der Rohr- bzw. der Behälteroberfläche voll anliegen, können sich keine Durchtrittskanäle für Leitungsflüssigkeit in der Reaktionsharzschicht bilden, und die Leckage bleibt nach dem Verschliessen der Perforationsöffnungen auch unter vollem Leitungsdruck dicht.

Die Erfindung wird anhand der in der Zeichnung dargestellten Ausführungsbeispiele näher erläutert. In der Zeichnung zeigen:
- Fig.1: die Schnittdarstellung eines Rohrbogens mit Leckagen,
- Fig.2: die Schnittdarstellung einer Behälterecke mit Leckage,
- Fig.3: die Schnittdarstellung einer Abdeckung,
- Fig.4: die Draufsicht auf Fig. 3,
- Fig.5: die Schnittdarstellung einer anderen Ausbildung der Abdeckung,
- Fig.6: die Draufsicht auf Fig. 5,
- Fig.7: die Abdeckung nach den Fig. 2 und 3 in Abdeckposition auf einem Rohrbogen nach Fig.1,
- Fig.8: die Abdeckung nach Fig.7 in Dichtposition,
- Fig.9: die Draufsicht auf eine weitere Ausbildungsform der Abdeckung,
- Fig.10: die Schnittdarstellung einer weiteren Ausbildungsform der Abdeckung und
- Fig.11: eine Schnittdarstellung entsprechend der in Fig.10 einer weiteren anderen Ausbildungsform.

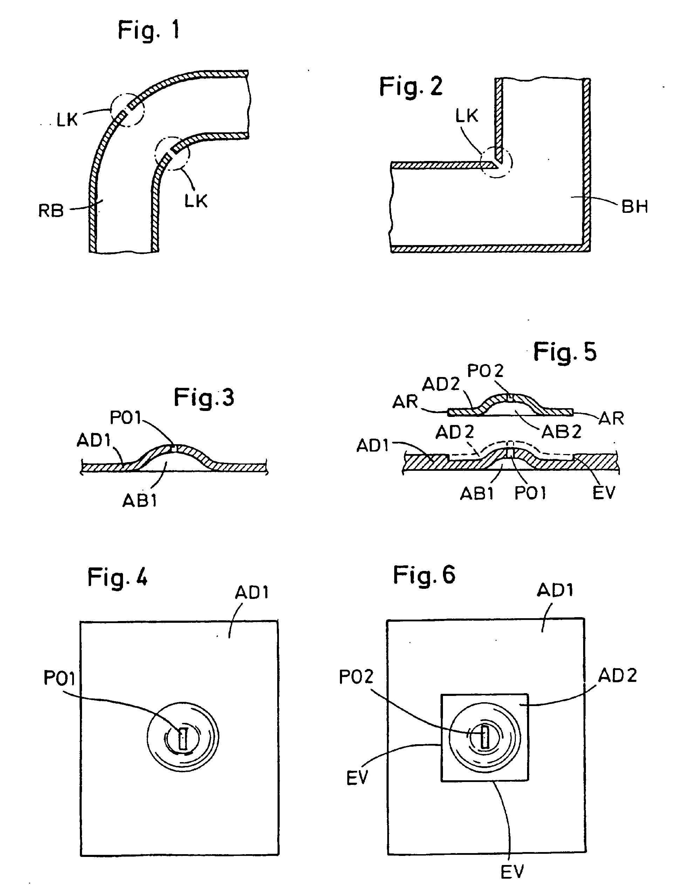

Fig. 1 und 2 zeigen mögliche Leckagen LK an einem Rohrbogen RB und in einer Ecke eines Behälters BH, während Fig. 3 die Ausbildung einer Abdeckung AD1 mit einer mittigen Ausbeulung AB1 darstellt. In deren oberem Abschnitt ist eine Perforationsöffnung PO1 eingeschnitten. Auf eine Abdeckung AD1 dieser Ausbildung kann, wie sich aus den Fig. 5 und 6 ergibt, eine zweite Abdeckung AD2 aufgesetzt werden. Diese ist wie die erste Abdeckung AD1 ebenfalls mit einer Ausbeulung AB2 ausgestattet, die hier auch mit einer, der Perforationsöffnung PO1 entsprechenden Perforationsöffnung PO2 versehen ist. Die Auflagefläche dieser zweiten Abdeckung AD2 ist (vgl. Fig. 6) kleiner bemessen als die der ersten Abdeckung AD1. Sie kann hier in eine, ihre Aussenränder AR umfassende Einfassungsvertiefung EV eingesetzt werden. Diese erleichtert die Positionierung der zweiten Abdeckung AD2, wenn beide durch Löten, Verschweissen oder Verkleben miteinander verbunden werden sollen.

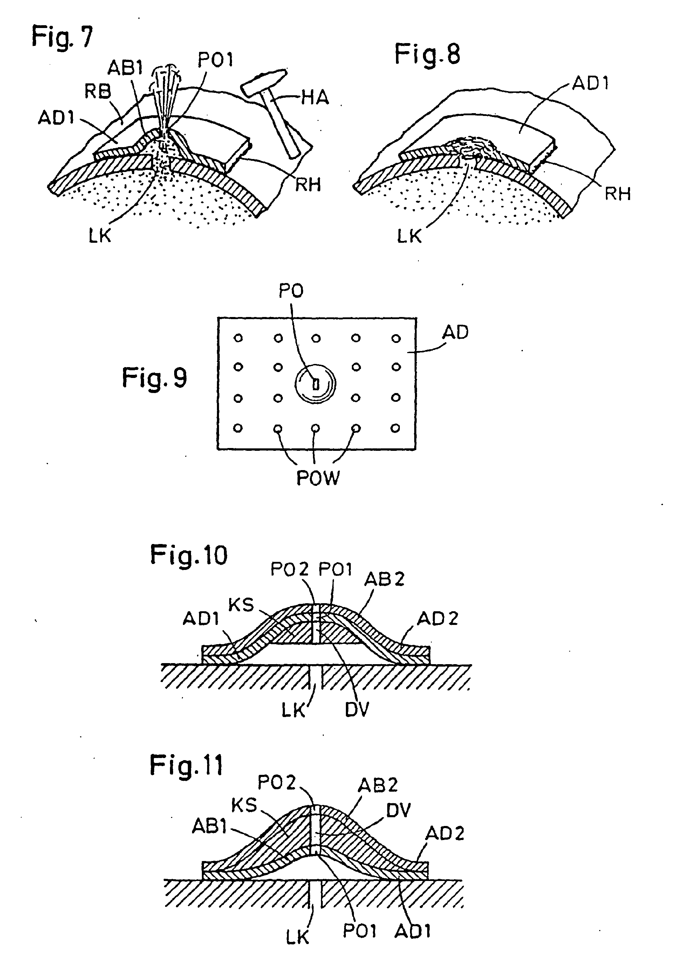

Aus Fig. 7 ist die, auf die Aussenfläche eines Rohrbogens RB aufgelegte und mittels einer Reaktionsharz-Schicht RH mit dieser verbundene erste Abdeckung AD1 zu ersehen. Aus der Leckage LK strömt die, in dem Rohrbogen RB geführte, unter Druck stehende Leitungsflüssigkeit in die Ausbeulung AB1 der Abdeckung AD1 und durch die Perforationsöffnung PO1 nach aussen heraus. Die Ausbeulung AB1wird hier mit Hilfe eines Hammers HA eingeebnet und dabei auch die schlitzförmige Perforationsöffnung PO1 geschlossen und damit der, in Fig. 8 wiedergegebene Dichtverschluss der Leckage LK erreicht.

Wie aus Fig. 9 ersichtlich, weist die Abdeckung AD hier neben der, über der Leckage LK anzuordnenden Perforationsöffnung PO eine Mehrzahl weiterer Perforationsöffnungen POW auf, die ausserhalb des Bereichs der Leckage LK angeordnet und dazu bestimmt sind, das Auflegen der flexiblen Abdeckung AD, insbes. auf gebogen verlaufende Auflageflächen um die Leckage LK herum zu erleichtern.

Die beiden, in den Fig. 10 und 11 dargestellten, mit ihren Ausbeulungen AB1 und AB2 übereinander gelegten Abdeckungen AD1 und AD2 weisen jeweils im oberen Bereich der Ausbeulung eine Schicht aus zähhartem Kunststoff auf. Bei der Anordnung nach Fig. 10 befindet sich diese Schicht KS oberhalb der Leckage LK, und bei der Anordnung nach Fig. 11 zwischen den beiden Ausbeulungen AB1 und AB2 der Abdeckungen AD1 und AD2. Die jeweilige Schicht KS weist bei beiden Anordnungen eine röhrenartige Durchgangsverbindung DV zu den Perforationsöffnungen PO1 bzw. PO2 auf.

Beim Schliessen dieser Anordnungen durch Druckschläge gemäss der Darstellungen nach Fig. 7 und Fig. 8 wird durch die dabei bewirkte Verformung der Kunststoffschicht KS zusammen mit den Ausbeulungen AB1 bzw. AB2 eine besonders gute und druckfeste Abdichtung der Leckage LK erreicht.

Verschiedene Versuche zur Anwendung des erfindungsgemässen Arbeitsverfahrens haben gezeigt, dass die angegebenen Reaktionsharze beim Gelieren und Aushärten gegenüber Wasser, Rohöl, Kompressorenöl, Pneumatiköl, Hydraulik-, Getriebe-, Maschinenöl, synthetischen Ölen, Petroleum oder Kraftstoffen, wie Benzin, Dieselöl, Fettprodukten und Flüssigkeiten aus der Gruppe der Alkohole und Kohlenwasserstoffen kaum Anfälligkeiten zeigen. Bei Metalloberflächen, die mit diesen Flüssigkeiten überzogen wurden, zeigen sich kaum Abschwächungen der Adhäsion der verwendeten Reaktionsharze. Diese gelieren trotz der Aufnahme der unterschiedlichen Flüssigkeiten in wenigen Minuten und härten danach schnell aus. Die Topfzeit sollte bei einer Umgebungstemperatur von etwa 20 °C nicht mehr als 2 bis 3 min und die Aushärtung nicht mehr als 10 min benötigen. Eine vorhergehende Säuberung der Oberfläche ist nicht nötig: Es kann jedoch eine leichte Aufrauhung vorgenommen werden, um die Haftung zu verstärken.

Bei einem Versuch wurden Abdeckplatten, hergestellt aus 2 mm starken Bleiwerkstoffen, in einer Grösse von ca. 60 x 50 mm verwandt. Ausgehend von der Fläche in der Mitte mit einer Grösse von ca. 22 x 22 mm verjüngten sich die angrenzenden Flächen nach aussen hin auf ca. 1 bis 1,5 mm. Auf diese Fläche wurde in der Mitte eine Kugel mit einem Durchmesser von 12 mm gepresst, so dass über der Fläche eine Wölbung mit Kreisquerschnitt mit einem Aussendurchmesser von ca. 22 mm und einer Höhe von ca. 5 mm entstand. Diese Wölbung hatte ebenfalls eine Wandstärke von ca. 2 mm. In diese Wölbung wurde eine schlitzförmige Öffnung von ca. 5 x 1 mm gedrückt, dies ohne dabei Material wegzustanzen. Es zeigte sich, dass bei grösseren Leckagen diese schlitzförmige Öffnung auf 5 x 5 mm vergrössert werden kann. Ausserdem lässt sich die Wölbung mit den Öffnungen bei hohem Druck leichter verformen . Die beschriebene Abdeckplatte wurde von Hand auf die, die Leckage umgebende Fläche gedrückt und dabei so fixiert, dass die austretende Flüssigkeit durch die Öffnung in der Platte frei austreten konnte. Anschliessend wurde die Platte entsprechend der Geometrie des Rohrbogens bzw. des Behälters mit einem Hammer formschlüssig angepasst und markiert. Dann wurde die Platte wieder abgenommen und auf deren Unterseite das Reaktionsharz aufgebracht und verteilt. Die Rohrbogen- bzw. Behälteroberfläche wurde nicht gesäubert sondern nur aufgerauht. Hierbei ist zu beachten, dass der Mittenbereich der Platte von Reaktionsharz freigehalten werden muss. Die Platte wurde dann von Hand kräftig auf die Fläche um die Leckage herum aufgedrückt und je nach Umgebungstemperatur einige Minuten so festgehalten. Die Flüssigkeit kann dabei ungehindert weiter aus der Leckage austreten. Aus allen anderen Bereichen der aufgedrückten Platte tritt dagegen keine Flüssigkeit aus. Die Öffnung der Platte wird dann mit Hilfe eines Hammers durch Aufschlagen mit der Hammerbahn vorsichtig geschlossen und dabei die Wölbung eingeebnet. Nach dem Schliessen der Leckage wurde eine weitere Beschichtung mit Reaktionsharz mit einer ca. 3 bis 7 mm dicken Schicht vorgenommen, wobei auch die, auf dem Rohrbogen aufliegenden Bereiche der Platte über deren Rand hinaus vollständig bedeckt wurden. Bei Schliessung der Leckage kam es bei keinem der Versuche zu einem Abheben der Platte.

Nach dem Schliessen der Leckage ist es wichtig zu ermitteln, wie hoch die Adhäsion der aufgedrückten Platte auf der mit Flüssigkeit kontaminierten Auflagefläche ist. Hierzu wurde die folgende Versuchsanordnung gewählt: In Prüfkörpern wurde ein Loch von 5 mm Durchmesser als künstliche Leckage gebohrt. Die hier verwendeten Bleiplatten wurden angepasst, dann das Reaktionsharz aufgebracht und anschliessend die Platte auf die Öffnung des Prüfkörpers gedrückt. Zum Zeitpunkt des Beschichtens des Prüfkörpers und dem bei Auflegen der Platte auf diesen wurde sichergestellt, dass die Leckage bedeckt wurde und keinen direkten Kontakt mit dem Reaktionsharz hatte. Damit wurde ein Verschluss der Leckage durch das Reaktionsharz ausgeschlossen.

Folgende Flüssigkeiten wurden bei der Untersuchung verwendet:
Wasser, Maschinenöl, Dieselöl und Benzin. Dabei wurde mit folgenden Varianten gearbeitet:
a) nur die Prüfkörper wurden in die Flüssigkeit getaucht,
b) nur die (Blei-)Platten wurden in die Flüssigkeiten getaucht,
c) sowohl die Platten als auch die Prüfkörper wurden in die Flüssigkeiten getaucht,
d) weder die Platten noch die Prüfkörper wurden in die Flüssigkeiten getaucht.

Nach der Aushärtung wurde die Adhäsion über Druckversuche ermittelt.

Dabei wurden folgende Ergebnisse festgestellt:

| Wasser Variante | Maschinenöl druckdicht bis | Variante | druckdicht bis |
|---|---|---|---|
| a | 80 bar | a | 130 bar |
| b | 120 bar | b | 180 bar |
| c | 110 bar | c | 185 bar |
| d | 80 bar | d | 135 bar |

| Dieselöl Variante | druckdicht bis | Benzin Variante | druckdicht bis |
|---|---|---|---|
| a | 120 bar | a | 130 bar |
| b | 150 bar | b | 150 bar |
| c | 140 bar | c | 150 bar |
| d | 120 bar | d | 120 bar |

Bei diesen Druckversuchen konnte in keinem Fall eine Undichtigkeit in der Schicht zwischen Reaktionsharz und den gereinigten oder kontaminierten Oberflächen des Prüfkörpers festgestellt werden. Bei Erreichen der maximalen Drücke entstanden zunächst zwischen dem Reaktionsharz und den gereinigten oder kontaminierten Oberflächen der Abdeckplatte, etwas versetzt von der Halbkugel, beulenförmige Auswölbungen. Ausgehend von diesen Auswölbungen unterwanderte die Flüssigkeit dann die Schicht zwischen Reaktionsharz und Abdeckplatte nach aussen und trat schließlich aus. Ebenso wurde die Druckfestigkeit der geschlossenen Halbkugel ermittelt. Dafür wurden die gleichen Prüfkörper verwendet. Es ergaben sich folgende Daten:
Halbkugel 2 mm stark, Schlitz 6 mm x 2 mm druckdicht bis 15 - 20 bar
Halbkugel 4 mm stark, Schlitz 6 mm x 2 mm druckdicht bis 40 - 45 bar
Halbkugel 4 mm stark Schlitz 6 mm x 2 mm, Halbkugel mit zähhartem Kunststoff angefüllt druckdicht bis 90 - 100 bar.

Die Frage des korrosionschemischen Verhaltens (Kontaktkorrosion) kann wie folgt beantwortet werden: Da keine direkte Verbindung von Metallplatten unterschiedlichster Legierungen mit den Oberflächen der Leitungsführungselemente besteht, ist eine Kontaktkorrosion beider Metalle praktisch unmöglich. Auch die metallversetzten Reaktionsharze sind elektrisch nicht leitend und können deshalb kein Lokalelement aufbauen. Die Untersuchungen wurden nach DIN 50900 in künstlichem Meerwasser und in einem sehr aggressiven Moorboden mit hohem Feuchtigkeitsgrad von 55 bis 85 % durchgeführt.

### Bezugszeichenliste

- AB1: Ausbeulung
- AB2: Ausbeulung
- RB: Rohrbogen
- BH: Behälter
- AD1: Abdeckung
- AD2: Abdeckung
- PO1: Perforationsöffnung
- P02: Perforationsöffnung
- AR: Aussenränder
- EV: Einfassungsvertiefung
- RH: Reaktionsharz-Schicht
- LK: Leckage
- HA: Hammer
- DV: Durchgangsverbindung
- KS: (zähharte) Kunststoffschicht
- POW: Perforationsöffnung

## Patentansprüche

1. Arbeitsverfahren zur Abdichtung von Leckagen (LK) in Flüssigkeiten führenden Rohren (RB) oder Flüssigkeiten enthaltenden Behältern (BH),bei denen auf den, die Leckage (LK) begrenzenden Aussenflächenbreich der Rohr- bzw. Behälterwand eine Abdichtung aufgebracht und mit diesem verbunden wird, die aus einer flexiblen Abdeckplatte (AD) und zwischen dieser und dem Aussenflächenbereich frei gehaltenen und verschliessbaren Durchlässen für die, aus der Leckage (LK) austretende Flüssigkeit besteht,
**dadurch gekennzeichnet, dass** die Verbindung der flexiblen Abdeckplatte (AD) und der Behälterwand mittels schnell aushärtender Reaktionsharze bewirkt wird, wobei die Abdeckplatte (AD) oberhalb der Leckage (LK) zu positionierende Perforationsöffnungen (PO) aufweist, die nach dem Aushärten der Reaktionsharze durch mechanisches ZUsammendrücken verschlossen werden.

2. Arbeitsverfahren nach Anspruch 1,
**dadurch gekennzeichnet,**
**dass** auf die Abdeckung (AD1) im Bereich von deren Perforationsöffnungen (PO1) eine zweite, in ihrem Umfang auf diesen Bereich beschränkte, ebenfalls mit Perforationsöffnungen (PO2) versehene Abdeckung (AD2) aufgelegt, mit der ersten Abdeckung verbunden und ihre Perforationsöffnungen (PO1; PO2) zusammen mit denen der ersten Abdeckung (AD1) verschlossen werden.

3. Arbeitsverfahren nach Anspruch 1,
**dadurch gekennzeichnet,**
**dass** die beiden Abdeckungen (AD1; AD2) vor dem Auflegen auf die Leckage (LK) löt-, schweiss- oder klebverbunden werden.

4. Arbeitsverfahren nach den Ansprüchen 1 und/oder 2,
**dadurch gekennzeichnet,**
**dass** das Verschliessen der Perforationsöffnungen (PO1, P02) in den Abdeckungen (AD1, AD2) mit hammerförmigen Druck- oder Schlagwerkzeugen bewirkt wird.

5. Arbeitsverfahren nach einem oder mehreren der Ansprüche 1 bis 4,
**dadurch gekennzeichnet,**
**dass** die Reaktionsharze während des Austretens der Flüssigkeiten aus der Leckage unter Druck, mit Abstand von dieser auf den umgebenden Aussenflächenbereich des Rohres bzw. des Behälters aufgebracht, anschliessend die Abdeckung auf die aufgebrachte Reaktionsharzschicht aufgelegt, angedrückt und dann die Perforationsöffnungen verschlossen werden.

6. Arbeitsverfahren nach einem der Ansprüche 1 oder 2,
**dadurch gekennzeichnet,**
**dass** für die Reaktionsharze Mischungen aus Epoxydharz-Systemen Bisphenol-A-ethoxylat(2)dimethacrylaten, Vinylester auf Basis von Bispenol-A-Epoxydharzen, Methylmetacrylaten, Polyolen, Polymercapton Harzen, ungesättigten Polyesterharzen, Polyethanharzen und Silikonen verwendet werden.

7. Arbeitsverfahren nach einem der Ansprüche 1 oder 2,
**dadurch gekennzeichnet,**
**dass** die Reaktionsharze mit feinteiligen Füllstoffen, wie nichtmetallischen Hartstoffen oder mit legierten nicht rostenden Eisenwerkstoffen, Magnesium-, Nickel-, Zink-, Titan-, Kupfer-, Aluminium-, Ferrochrom-, Ferrochromsiliziumaluminium-, Ferrosilizium-Legierungen, Hartmetall oder inerten Füllstoffen, wie verstärkten Fasern, wie Glas- oder Kohlefaser oder mit mineralischen Füllstoffen versetzt sind.

8. Arbeitsverfahren nach Anspruch 1,
**dadurch gekennzeichnet,**
**dass** die Perforationsöffnungen (PO) in den Abdeckungen (AD) in einer, bei deren Positionierung über der Leckage (LK), von dieser weg gerichteten und offenen Ausbeulung angeordnet sind.

9. Arbeitsverfahren nach Anspruch 8,
**dadurch gekennzeichnet,**
**dass** die Ausbeulung (AB) etwa halbkugelförmig ausgebildet ist.

10. Arbeitsverfahren nach Anspruch 1,
**dadurch gekennzeichnet**
**dass** die Perforationsöffnungen (PO) als schmale Längsschlitze oder Rundlöcher ausgebildet sind.

11. Arbeitsverfahren nach Anspruch 2,
**dadurch gekennzeichnet,**
**dass** die erste Abdeckung (AD1) eine, die Aussenränder (AR) der zweiten Abdeckung (AD2) umfassende Einfassungsvertiefung (EV) aufweist.

12. Arbeitsverfahren nach Anspruch 1,
**dadurch gekennzeichnet,**
**dass** Abdeckungen (AD), die aus zwei oder mehr Platten bestehen, zwischen den Platten Zwischenschichten aus Kunststoffen oder Geweben aufweisen.

13. Arbeitsverfahren nach Anspruch 1,
**dadurch gekennzeichnet,**
**dass** die Abdeckungen (AD) in ihren, auf die Aussenflächen der Rohr- oder Behälterwand aufzulegenden Bereichen, mit Abstand von den, oberhalb der Leckage (LK) zu positionierenden Perforationsöffnungen (PO) für den Flüssigkeitsdurchtritt einer Reihe von weiteren Perforationsöffnungen (POW) aufweisen.

14. Arbeitsverfahren nach Anspruch 1,
**dadurch gekennzeichnet,**
**dass** in dem, oberhalb der Leckage (LK) zu positionierenden Bereich übereinander liegender Platten eine zähharte Kunststoffschicht (KS) angeordnet ist, die eine, den Perforationsöffnungen (PO) entsprechende Durchtrittsöffnung (DV) aufweist.

15. Arbeitsverfahren den Ansprüchen 8 und/oder 9,
**dadurch gekennzeichnet,**
**dass** die zähharte Kunststoffschicht (KS) mit ihrer Durchtrittsöffnung (DV) im oberen inneren Bereich der Ausbeulung (AB) mit Abstand von den, darunter befindlichen Leckage-Öffnungen (LK) angeordnet ist.

16. Arbeitsverfahren nach den Ansprüchen 8, 14 und 15,
**dadurch gekennzeichnet,**
**dass** bei zwei übereinander angeordneten Ausbeulungen (AB1; AB2) die zähharte Kunststoffschicht (KS) zwischen beiden Ausbeulungen (AB1, AB2) angeordnet ist.

17. Arbeitsverfahren nach einem oder mehreren der Ansprüche 1 - 7,
**dadurch gekennzeichnet,**
**dass** zur Abdichtung von Leckagen in Form längerer Risse zwei oder mehr der Abdeckungen in Längsrichtung des Risses hintereinander, mit ihren benachbarten Kanten aneinander stossend oder einander überdeckend, auf die Rohr- bzw. Behälterwand aufgebracht und mit dieser verbunden werden.

## Claims

1. A working method for sealing leaks (LK) in liquid-carrying pipes (RB) or liquid-containing containers (BH) wherein a seal is applied to the outer surface region of the pipe or container wall defining the leak (LK) and is connected thereto, said seal comprising a flexible cover plate (AD) and closable openings kept free between said cover plate and the outer surface region for the fluid escaping from the leak (LH), **characterised in that** the connection between the flexible cover plate (AD) and the container wall is effected by means of rapidly hardening reaction resin, wherein the cover plate (AD) has perforation openings (PO) to be positioned above the leak (LK) which are closed by mechanical compression after the reaction resin has hardened.

2. The working method according to claim 1, **characterised in that** a second cover (AD2) likewise provided with perforation openings (PO2) and restricted in its circumference to this region is applied to the cover (AD1) in the area of its perforation openings (PO1), connected to the first cover and its perforation openings (PO1; P02) are closed together with those of the first cover (AD1).

3. The working method according to claim 1, **characterised in that** the two covers (AD1; AD2) are joined by soldering, welding or adhesion before placing on the leak (LK).

4. The working method according to claims 1 and/or 2, **characterised in that** the perforation openings (PO1, P02) in the covers (AD1, AD2) are closed using hammer-like pressure or striking tools.

5. The working method according to one or more of claims 1 to 4, **characterised in that** the reaction resin is applied to the surrounding outer surface area of the pipe or the container during escape of liquids from the leak under pressure, at a distance therefrom, the cover is then placed on the applied layer of reaction resin, pressed thereon and the perforation openings are then closed.

6. The working method according to any one of claims 1 or 2, **characterised in that** mixtures of epoxy resin systems, bisphenol-A-ethoxylate(2)dimethacrylates, vinyl esters based on bisphenol-A-epoxy resins, methylmethacrylates, polyolene, polymercaptone resins, unsaturated polyester resins, polyethane resins and silicones are used for the reaction resins.

7. The working method according to any one of claims 1 or 2, **characterised in that** the reaction resins are mixed with fine fillers such as non-metallic hardeners or with alloyed, stainless ferrous materials, magnesium, nickel, zinc, titanium, copper, aluminium, ferrochromium, ferrochromium silicon aluminium, ferrosilicon alloys, hard metal or inert fillers such as reinforced fibres such as glass or carbon fibres or with mineral fillers.

8. The working method according to claim 1, **characterised in that** the perforation openings (PO) in the covers (AD) in their positioning over the leak (LK) are arranged in an open protuberance directed away therefrom.

9. The working method according to claim 8, **characterised in that** the protuberance (AB) is embodied as approximately hemispherical.

10. The working method according to claim 1, **characterised in that** the perforation openings (PO) are embodied as narrow longitudinal slits or round holes.

11. The working method according to claim 2, **characterised in that** the first cover (AD1) has an enclosing indentation (EV) which surrounds the outer edges (AR) of the second cover (AD2).

12. The working method according to claim 1, **characterised in that** covers (AD) consisting of two or more plates have intermediate layers of plastics or fabrics between the plates.

13. The working method according to claim 1, **characterised in that** in their areas to be placed on the outer surfaces of the pipe or container wall, the covers (AD) have a row of additional perforation openings (POW) at a distance therefrom, above the perforation openings (PO) to be positioned above the leak (LK) for the passage of liquid.

14. The working method according to claim 1, **characterised in that** a tough plastic layer (KS) is applied in the region of superposed plates to be positioned above the leak (LK), which has a through opening (DV) corresponding to the perforation openings (PO).

15. The working method according to claims 8 and/or 9, **characterised in that** the tough plastic layer (KS) is disposed with its through opening (DV) in the upper inner area of the protuberance (AB) at a distance from the leak openings (LK) located thereover.

16. The working method according to claims 8, 14 and 15, **characterised in that** in the case of two protuberances (AB1; AB2) placed above one another, the tough plastic layer (KS) is located between the two protuberances (AB1, AB2).

17. The working method according to one or more of claims 1 to 7, **characterised in that** for sealing leaks in the form of longer cracks, two or more covers are placed on the pipe or container wall and connected thereto, one after the other in the longitudinal direction of the cracks, with their adjacent edges abutting against one another or overlapping one another.

## Revendications

1. Procédé opératoire pour le colmatage de fuites (LK) dans des tuyaux conducteurs de liquide (RB) ou des récipients contenant des liquides (BH) dans lesquels, sur la zone surfacique extérieure de la paroi du tuyau ou du récipient délimitant la fuite (LK), on applique une étanchéité et on la raccorde à cette zone, cette étanchéité étant constituée d'une plaque de recouvrement souple (AD) et de passages maintenus libres et pouvant être obturés entre celle-ci et la zone surfacique extérieure pour le liquide sortant par la fuite (LK),
**caractérisé en ce que**
le raccordement de la plaque de recouvrement souple (AD) et de la paroi du récipient est effectué au moyen de résines réactives à durcissement rapide, tandis que la plaque de recouvrement (AD) présente des ouvertures perforées (PO) à positionner au dessus de la fuite (LK) et qui, après durcissement des résines réactives, sont fermées par compression mécanique.

2. Procédé opératoire selon la revendication 1,
**caractérisé en ce que**,
sur le recouvrement (AD1), au niveau de ses ouvertures perforées (PO1), on pose un deuxième recouvrement (AD2) limité en circonférence à cette zone et également pourvu d'ouvertures perforées (PO2), on le raccorde au deuxième recouvrement et on ferme ses ouvertures perforées (PO1 ; P02) en même temps que celles du premier recouvrement (AD1).

3. Procédé opératoire selon la revendication 1,
**caractérisé en ce que**,
les deux recouvrements (AD1 ; AD2) sont brasés, soudés ou collés ensemble avant de les poser sur la fuite (LK).

4. Procédé opératoire selon les revendications 1 et/ou 2,
**caractérisé en ce que**
la fermeture des ouvertures perforées (PO1, P02) des recouvrements (AD1, AD2) est effectuée au moyen d'outils de compression ou de frappe de type marteaux.

5. Procédé opératoire selon une ou plusieurs des revendications 1 à 4,
**caractérisé en ce que**
les résines réactives sont appliquées pendant la sortie des liquides par la fuite, sous pression et à distance de celle-ci, sur la zone surfacique extérieure environnante du tuyau ou du récipient, qu'ensuite le recouvrement est posé et comprimé contre la couche de résine réactive appliquée et que les ouvertures perforées sont ensuite refermées.

6. Procédé opératoire selon une des revendications 1 ou 2,
**caractérisé en ce que**
qu'on utilise pour les résines réactives des mélanges de systèmes de résines époxydes, des bisphénol-A-éthoxylate(2)diméthacrylates, des vinylesters à base de bisphénol-A-résines époxydes, des méthylmétacrylates, des polyols, des résines de polymèrecaptone, des résines de polyester insaturées, des résines de polyéthane et des silicones.

7. Procédé opératoire selon une des revendications 1 ou 2,
**caractérisé en ce que**
les résines réactives sont réticulées avec des matières de charge en particules fines, comme des matières dures non métalliques ou avec des matériaux d'aciérie alliés inoxydables, des alliages de magnésium, nickel, zinc, titane, cuivre, aluminium, ferrochrome, ferrochrome-silicium-aluminium, ferrosilicium, du carbure ou des matières de charge inertes comme des fibres renforcées telles que des fibres de verre ou de carbone ou avec des matières de charge minérales.

8. Procédé opératoire selon la revendication 1,
**caractérisé en ce que**
les orifices perforés (PO) sont disposés dans les recouvrements (AD), dans un renflement qui, lors de son positionnement au dessus de la fuite (LK), est détourné de celle-ci et ouvert.

9. Procédé opératoire selon la revendication 9,
**caractérisé en ce que**
le renflement (AB) est réalisé approximativement en forme d'hémisphère.

10. Procédé opératoire selon la revendication 1,
**caractérisé en ce que**
les orifices perforés (PO) sont réalisés sous forme de fentes longitudinales étroites ou de trous ronds.

11. Procédé opératoire selon la revendication 2,
**caractérisé en ce que**
le premier recouvrement (AD1) présente un renfoncement de sertissage (EV) entourant les bords extérieurs (AR) du deuxième recouvrement (AD2).

12. Procédé opératoire selon la revendication 1,
**caractérisé en ce que**
les recouvrements (AD) composés de deux plaques ou davantage comportent entre les plaques des couches intermédiaires en matière plastique ou en textile.

13. Procédé opératoire selon la revendication 1,
**caractérisé en ce que**
les recouvrements (AD) comportent, dans leurs zones à poser sur les surfaces extérieures de la paroi de tuyau ou de récipient, à distance des orifices perforés (PO) pour le passage de liquide à positionner au dessus de la fuite (LK), une série d'autres ouvertures perforées (POW).

14. Procédé opératoire selon la revendication 1,
**caractérisé en ce que**,
dans la zone à positionner au dessus de la fuite (LK) de plaques superposées, il est disposé une couche de matière plastique dure (KS) qui présente un orifice de passage (DV) correspondant aux orifices perforés (PO).

15. Procédé opératoire selon les revendications 8 et/ou 9,
**caractérisé en ce que**
la couche de matière plastique dure (KS) est disposée avec son orifice de passage (DV) dans la zone interne supérieure du renflement (AB) à distance des orifices de fuite (LK) se trouvant en dessous.

16. Procédé opératoire selon les revendications 8, 14 et 15,
**caractérisé en ce que**,
dans le cas de deux renflements superposés (AB1 ; AB2), la couche de matière plastique dure (KS) est disposée entre les deux renflements (AB1 ; AB2).

17. Procédé opératoire selon une ou plusieurs des revendications 1 à 7,
**caractérisé en ce que**,
pour colmater des fuites en forme de fissures plus longues, on applique l'un derrière l'autre deux recouvrements ou davantage dans le sens longitudinal de la fissure de manière à ce qu'ils se touchent par leurs bords voisins ou à ce qu'ils se recouvrent mutuellement sur la paroi de tuyau ou de récipient et on les raccorde à celle-ci.
